# EUROPÄISCHE PATENTSCHRIFT

(11) **EP 2 359 215 B1**
(45) Veröffentlichungstag und Bekanntmachung des Hinweises auf die Patenterteilung: **02.05.2018**
(21) Anmeldenummer: 09756490.0
(22) Anmeldetag: 20.11.2009
(51) Int. Cl.: G06F 1/30, H02J 7/00

(54) **FELDGERÄT ZUR BESTIMMUNG UND/ODER ÜBERWACHUNG EINER PHYSIKALISCHEN ODER CHEMISCHEN PROZESSGRÖßE**
FIELD DEVICE FOR DETERMINING AND/OR MONITORING A PHYSICAL OR CHEMICAL PROCESS PARAMETER
APPAREIL DE TERRAIN POUR LA DÉTERMINATION ET/OU LA SURVEILLANCE D'UNE GRANDEUR PHYSIQUE OU CHIMIQUE D'UN PROCESSUS

(30) Priorität: 18.12.2008 DE 102008054883
(43) Veröffentlichungstag der Anmeldung: 24.08.2011
(73) Patentinhaber: Endress+Hauser Process Solutions AG, 4153 Reinach (CH)
(72) Erfinder: FIEDLER, Marc, CH-4153 Reinach (CH)
(74) Vertreter: Andres, Angelika Maria
(86) Internationale Anmeldenummer: PCT/EP2009/065531
(87) Internationale Veröffentlichungsnummer: WO 2010/069708

(56) Entgegenhaltungen:
- EP-A2- 1 933 116
- WO-A1-2006/087596
- US-A1- 2008 012 570

## Beschreibung

Die Erfindung betrifft ein Feldgerät zur Bestimmung und/oder Überwachung einer physikalischen oder chemischen Prozessgröße in der Automatisierungstechnik mit zumindest einem Mikrokontroller und mit einer Versorgungseinheit mit beschränkter Kapazität als primäre Versorgungsspannung für den Mikrokontroller. Bei der Versorgungseinheit mit beschränkter Kapazität handelt es sich um eine Batterie, eine Brennstoffzelle oder einen Akku.

Feldgeräte, die zur Erfassung und/oder Beeinflussung von Prozessgrößen dienen, werden in der Prozessautomatisierungstechnik ebenso wie in der Fertigungsautomatisierungstechnik vielfach eingesetzt. Zur Erfassung von Prozessgrößen dienen Messgeräte, die jeweils mindestens einen Sensor und einen Messumformer aufweisen. Beispielsweise handelt es sich bei den Messgeräten um Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann.

Als Feldgeräte werden im Prinzip alle Geräte bezeichnet, die prozessnah eingesetzt werden und die prozessrelevante Informationen liefern oder verarbeiten. Neben den zuvor genannten Messgeräten/Sensoren und Aktoren werden als Feldgeräte allgemein auch solche Einheiten bezeichnet, die direkt an einem Feldbus angeschlossen sind und zur Kommunikation mit den übergeordneten Einheiten dienen, wie z.B. Remote I/Os, Gateways, Linking Devices und Wireless Adapters. Eine Vielzahl solcher Feldgeräte wird von der Endress + Hauser-Gruppe hergestellt und vertrieben.

In modernen Industrieanlagen sind Feldgeräte in der Regel über Feldbussysteme, wie z.B. (Profibus®, Foundation Fieldbus®, HART®, etc. mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das angeschlossene Bussystem an eine oder gegebenenfalls auch an mehrere übergeordnete Einheit(en) übermittelt. Daneben ist auch eine Datenübertragung von der übergeordneten Einheit über das Bussystem an die Feldgeräte erforderlich; diese dient insbesondere zur Konfigurierung und Parametrierung von Feldgeräten oder zu Diagnosezwecken. Allgemein gesprochen, wird das Feldgerät über das Bussystem von der übergeordneten Einheit her bedient.

Neben einer drahtgebundenen Datenübertragung zwischen den Feldgeräten und der übergeordneten Einheit besteht auch die Möglichkeit einer drahtlosen Datenübertragung. Zur Realisierung einer drahtlosen Datenübertragung sind Feldgeräte beispielsweise als Funk-Feldgeräte ausgebildet. Diese weisen in der Regel eine Funkeinheit und eine Versorgungseinheit als integrale Bestandteile auf. Dabei können die Funkeinheit und die Versorgungseinheit in dem Feldgerät selbst oder in einem dauerhaft an dem Feldgerät angeschlossenen Funkmodul vorgesehen sein. Durch die Versorgungseinheit wird eine autarke Energieversorgung des Feldgerätes ermöglicht.

Alternativ werden Feldgeräte ohne Funkeinheiten - also die heute im Feld installierte Basis - durch die Ankopplung eines Wireless Adapters, der eine Funkeinheit aufweist, zu einem Funk-Feldgerät aufgerüstet.

Bei autarken Feldgeräten, die über einen Mikrokontroller gesteuert werden, ist es üblich, eine Schaltung vorzusehen, die den Ausfall der Versorgungsspannung der Versorgungseinheit schnell und zuverlässig detektiert. Hierdurch hat der Mikrokontroller die Möglichkeit, wichtige Parameter zu speichern, bevor auch eine sekundäre Versorgungseinheit ausfällt. Als sekundäre Versorgungseinheit wird üblicherweise ein Energiespeicher verwendet, der die Schaltungskomponenten des Feldgeräts nach dem Ausfall der Versorgungseinheit noch für eine begrenzte Zeit mit Spannung versorgen kann. Bekannte Schaltungsvarianten der Detektion eines sog. "Pre-Power-Fail" sind resistive Spannungsteiler oder Lösungen in Form von integrierten Schaltkreisen, welche meist die Versorgungsspannung auf einen durch den Mikrokontroller detektierbaren Spannungswert skalieren und so den Ausfall messbar machen.

Oftmals verwenden Mikrokontroller/CPUs an ihren Signaleingängen Schmitt-Trigger Stufen. Wird ein entsprechender Signaleingang benutzt, können kleinere Schwankungen, die sich u.U. aus der Skalierung der Versorgungsspannung mittels Spannungsteiler ergeben, nur ungenau gemessen werden. Hinzu kommen meist noch Toleranzen bei den Schmitt-Trigger-Schaltpegeln. Genauer und damit zuverlässiger ist die frühzeitige Detektion eines Ausfalls der Versorgungsspannung mittels eines Komparatoreinganges; jedoch ist diese Lösung bezüglich des Energieverbrauchs ungünstig.

Besondere Nachteile der Abskalierung der Versorgungsspannung ergeben sich bei batteriebetriebenen Geräten, also bei Geräten mit einer begrenzten Kapazität: Mit sinkender Batteriespannung wird auch die Spannung am Detektionseingang geringer. Deshalb muss bei der Festlegung der Detektionsschwelle von einer Mindestbatteriespannung ausgegangen werden.

Dies wiederum bedingt nur einen geringen Abstand zwischen dem "gut"- und "schlecht"- (fail) Signallevel. Als Folge hiervon ist diese Art der Detektion sehr störanfällig gegenüber Einkopplungen auf den Signalleitungen.

Die Detektion eines Pre-Power-Fail über resistive Spannungsteiler oder auch über auf dem Markt erhältliche integrierte Schaltungen benötigt relativ viel Energie, wobei Energie insbesondere bei batteriebetriebenen Geräten sehr kostbar ist. Je niederohmiger der Teiler ausgelegt ist, desto höher ist der (Verlust-) Strom; je hochohmiger der Teiler ausgelegt ist, desto störanfälliger ist die Schaltung gegenüber Einkopplungen.

Das Dokument EP1933116 offenbart ein Feldgerät zur Bestimmung und/oder Überwachung einer physikalischen oder chemischen Prozessgröße in der Automatisierungstechnik gemäß des Oberbegriffs des Anspruchs 1.

Der Erfindung liegt die Aufgabe zugrunde, den Ausfall der primären Versorgungsspannung energiesparend, sicher und störunempfindlich zu detektieren.

Die Aufgabe wird dadurch gelöst, dass eine Detektionsschaltung vorgesehen ist, die dem Mikrokontroller einen Ausfall der Versorgungseinheit so frühzeitig mittels eines Detektionssignals signalisiert, dass ausreichend Zeit zur Verfügung steht, geeignete Sicherungsmaßnahmen zu ergreifen, um einen Verlust von Daten zu verhindern, wobei das Detektionssignal für einen Spannungsabfall der Versorgungsspannung der Detektionsschaltung über ein Schaltungsteil auf einen zumindest näherungsweise konstanten Wert einstellbar ist und wobei die Detektionsschaltung so ausgebildet ist, dass eine für die Erzeugung eines Detektionssignals erforderliche Referenzspannung einen nahezu konstanten Abstand zur Versorgungsspannung aufweist und sich über einen vorgebbaren Zeitraum an die von der Vorsorgungseinheit zur Verfügung gestellte Versorgungsspannung anpasst, und dass im Falle des Unterschreitens dieser vorgegebenen Referenzspannung ein Detektionssignal an den Mikrokontroller ausgegeben wird.

Erfindungsgemäß ist die Referenzspannung einstellbar und liegt in einem konstanten Abstand zur Versorgungsspannung, die von einer Versorgungseinheit mit einer beschränkten Kapazität zur Verfügung gestellt wird. Beispielsweise handelt es sich bei der Versorgungsspannung um eine Batteriespannung. Hier wird bei alterungsbedingtem meist sehr langsamem Absinken der Batteriespannung auch die Referenzspannung entsprechend geringer. Somit läuft die Schaltschwelle der Detektionsschaltung, welche der Referenzspannung entspricht, mit der Batteriespannung mit. Daher ist das Ansprechverhaften der Detektionsschaltung in weiten Teilen unabhängig vom Zustand der Batterie bzw. der Versorgungseineinheit. Der Abstand des "gut"- und "schlecht"- (fail) Signalpegels, sprich die Differenz der Versorgungsspannung zur Referenzspannung, ist einstellbar und im Normalbetrieb konstant. Ein großer Vorteil der erfindungsgemäßen Lösung ist der gegenüber bekannten Lösungen geringe Energieverbrauch.

Obwohl die erfindungsgemäße Detektionsschaltung bislang in Verbindung mit einem Feldgerät beschrieben ist, kann sie generell in Verbindung mit beliebigen Geräten eingesetzt werden, die von einer Versorgungseinheit mit einer begrenzten Kapazität gespeist werden.

Eine vorteilhafte Ausgestaltung des erfindungsgemäßen Feldgeräts schlägt einen Spannungskonverter vor, der zwischen die Versorgungseinheit, die eine primäre Versorgungsspannung zur Verfügung stellt, und den Mikrokontroller geschaltet ist, wobei der Spannungskonverter die primäre Versorgungsspannung in eine auf den Mikrokontroller abgestimmte sekundäre Versorgungsspannung konvertiert.

Weiterhin wird vorgeschlagen, dass zu der Versorgungseinheit oder zu dem Spannungskonverter ein erster Energiespeicher im Nebenzweig nachgeschaltet ist, der bei Ausfall der Versorgungseinheit dem Mikrokontroller genügend Energie zur Verfügung stellt, damit dieser geeignete Sicherungsmaßnahmen ergreifen kann, um den Verlust von Daten zu verhindern. Die gespeicherte Energie ist beispielsweise so bemessen, dass der Mikrokontroller noch nicht gespeicherte Daten abspeichern kann.

Darüber hinaus sieht eine Weiterbildung des Feldgeräts vor, dass in Reihe mit der Versorgungseinheit oder in Reihe mit dem Spannungskonverter eine Diode in Sperrrichtung angeordnet ist, die, für den Fall, dass die Energieversorgungseinheit ausfällt, den Stromfluss aus dem ersten Energiespeicher in Richtung Spannungskonverter bzw. in Richtung Versorgungseinheit sperrt.

Bevorzugt ist das Schaltungsteil so ausgelegt ist, dass es einerseits einen zumindest näherungsweise konstanten Spannungsabfall erzeugt und andererseits den Stromfluss in Richtung der Versorgungseinheit unterbindet. Bei dem Schaltungsteil handelt es sich um zumindest eine Diode oder um mehrere in Reihe geschaltete Dioden. Alternativ handelt es sich bei dem Schaltungsteil um eine Reihenschaltung, bestehend aus einer Diode in Flussrichtung und einer Zehnerdiode in Sperrrichtung.

Eine vorteilhafte Ausgestaltung sieht vor, dass dem Schaltungsteil ein zweiter Energiespeicher im Nebenzweig nachgeschaltet ist, der im Normalfall auf ein vorbestimmtes Potential (B) aufgeladen ist, wobei das Potential (B) gegenüber dem Potential (A), das am Eingang des Schaltungsteils anliegt, um den Spannungsabfall des Schaltungsteils verringert ist.

Um sicherzustellen, dass im normalen Betriebsfall die Anpassung der Schaltschwelle (=Referenzspannung) zur Versorgungsspannung rasch genug erfolgt, wird vorgeschlagen, parallel zu dem zweiten Energiespeicher einen Widerstand zu schalten.

Darüber hinaus wird im Zusammenhang mit dem erfindungsgemäßen Feldgerät vorgeschlagen, dass in Reihe zu dem Schaltungsteil ein Schaltelement angeordnet ist, das so angesteuert wird, dass es bei Ausfall der Energieversorgungseinheit automatisch ein Signal an den Mikrokontroller sendet, das diesem den Ausfall der Versorgungseinheit signalisiert.

Bevorzugt handelt es sich bei dem Schaltelement um einen p-leitenden Transistor mit Gate, Drain und Source, der im Normalfall sperrt, wenn also an dem Gate das Potential A und am Soruce das Potential B anliegt und das Potential A größer ist als das Potential B - also um einen p-leitenden Feldeffekttransistor. Ebenso kann jedoch auch ein geeigneter p-leitende bipolarer Transistor zum Einsatz kommen.

Im Falle des Einsatzes eines Feldeffekt-Transistors ist dieser so beschaltet, dass er leitend wird und dem Mikrokontroller durch ein Detektionssignal den Ausfall der Versorgungseinheit anzeigt, sobald infolge des Ausfalls der Versorgungseinheit das Potential A am Gate kleiner wird als das Potential B am Source.

Als vorteilhaft wird es angesehen, wenn darüber hinaus an das Drain des Transistors eine Zehnerdiode in Sperrichtung gegen Masse geschaltet ist, die das Signal, das an den Mikrokontroller gesendet wird, auf einen Grenzwert reduziert, der innerhalb der Spezifikation des Mikrokontrollers liegt. Somit wird eine Beschädigung des Mikrokontrollers vermieden.

Die Erfindung wird anhand der nachfolgenden Figuren näher erläutert. Es zeigt:
Fig. 1: eine vorteilhafte Ausgestaltung der erfindungsgemäßen Detektionsschaltung,
Fig. 2: eine erste Ausführungsform des Schaltungsteils und
Fig. 3: eine zweite Ausführungsform des Schaltungsteils.

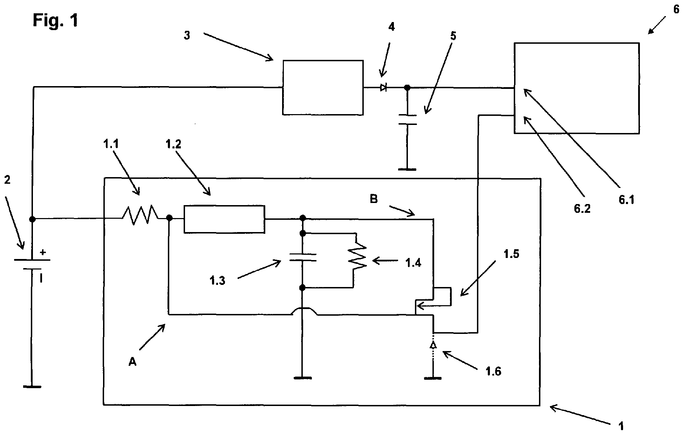

In Fig. 1 sind die für ein batteriebetriebenes Feldgerät notwendigen Komponenten 2, 3, 4, 5 mit Mikrokontroller 6 und die Detektionsschaltung 1 dargestellt. Die Detektionsschaltung 1 kann selbstverständlich auch einem Funkadapter, einem sog. Local Wireless Adapter, zugeordnet sein. Bei dem Feldgerät 7 handelt es sich um ein Gerät, wie es in der Beschreibungseinleitung der vorliegenden Patentanmeldung im Detail beschrieben ist.

Gespeist wird das Feldgerät 7 von der primären Versorgungseinheit 2, bei der es sich bevorzugt um eine Batterie handelt. Diese speist den Spannungskonverter 3, welcher wiederum den Mikrokontroller 6 mit Spannung versorgt.

Die Kapazität 5 dient als Energiespeicher und sorgt als Puffer im Falle des Ausfalls der primären Versorgungseinheit 2 dafür, dass der Mikrokontroller 6 noch genügend Energie zur Verfügung hat, um geeignete Maßnahmen zum Sichern noch nicht gespeicherter Daten zu ergreifen. Die Diode 4 verhindert, dass sich der erste Energiespeicher 5, bei dem es sich üblicherweise um einen Kondensator handelt, über den Spannungskonverter 3 entlädt. Das Dazwischenschalten einer Diode 4 ist übrigens nicht bei allen Spannungskonvertern 3 nötig, so dass die Diode 4 auch ggf. entfallen kann.

Die Detektionsschaltung 1 besteht im gezeigten Fall aus einem Widerstand 1.1, einem Schaltungsteil 1.2, einem zweiten Energiespeicher 1.3 mit parallel geschaltetem Widerstand 1.4 im Nebenschluss, einem Schaltelement 1.5 und einer Zenerdiode 1.6. Optional sind bei dieser Schaltung der Widerstand 1.1, der Widerstand 1.4 und die Zehnerdiode 1.6. So dient der Widerstand 1.1 beispielsweise beim Einsatz des Feldgeräts 7 im explosionsgefährdeten Bereich dafür, die verfügbare Energie so zu begrenzen, dass den geforderten Ex-Schutz-Bedingungen Genüge getan ist. Der zum zweiten Energiespeicher 1.3 parallel geschaltete Widerstand 1.4 ist so bemessen, dass die Selbstentladung des zweiten Energiespeichers 1.3 beschleunigt erfolgen kann und dass sich die Referenzspannung so schneller einem Abfall der Versorgungsspannung anpassen kann, sofern dieser nicht als Ausfall gedeutet werden soll. Weiterhin beschränkt die Zenerdiode 1.6 den Pegel des Detektionssignals, das bei Ausfall der Vorsorgungseinheit 2 an den Mikrokontroller 6 gesendet wird, auf einen Grenzwert, der innerhalb der Spezifikation des Mikrokontrollers 6 liegt. Liegt der Pegel des Detektionssignals als solches bereits innerhalb der Spezifikation, so kann die Zehnerdiode 1.6 entfallen.

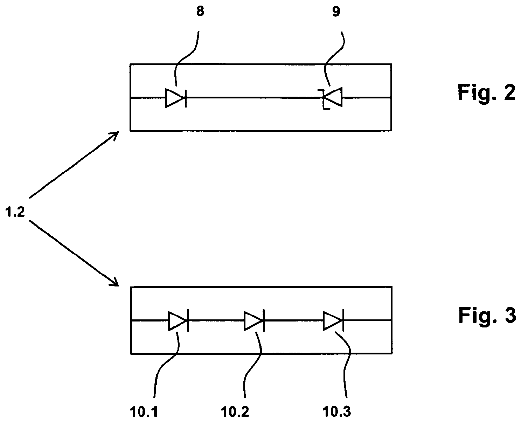

Die wesentlichen Komponenten der Detektionsschaltung 1 sind somit das Schaltungsteil 1.2, der zweite Energiespeicher 1.3 und das Schaltelement 1.5. Das Schaltungsteil 1.2 erzeugt einen konstanten Spannungsabfall bei gleichzeitiger Sperrung des Stroms in Richtung der Versorgungseinheit 2. Über z.B. die Anzahl oder Art der Dioden ist der gewünschte Spannungsabfall einstellbar. Wie in Fig. 2 und Fig. 3 dargestellt kann das Schaltungsteil 1.2 aus einer in Flussrichtung geschalteten Diode 8 (z.B. eine Si Diode) und einer nachgeschalteten Zenerdiode 9 bestehen, wobei die Zenerdiode 9 in Sperrrichtung betrieben wird (Abb. 2). Alternativ kann das Schaltungsteil 1.2 aus einer Diode 10.1 bzw. mehreren Dioden (Si Dioden) 10.1, 10.2, 10.3 bestehen, die in Flussrichtung betrieben werden (Abb. 3). Der näherungsweise konstante Spannungsabfall ergibt sich im Wesentlichen aus der Summe der Flussspannungen der Dioden 10.1, 10.2, 10.3, z.B. Si Dioden (Fig. 3) bzw. aus der Zenerspannung der Zenerdiode 9 summiert mit der Flussspannung einer Diode 8 (Si Diode). Welche Variante verwendet wird, richtet sich nach dem benötigten Spannungsabfall. Für größere Spannungsabfälle ist die Variante aus Diode 8 und Zenerdiode 9 (Fig. 2) zweckmäßiger.

Über den optionalen Widerstand 1.1, der der Eingangsstrombegrenzung dient, und den Schaltungsteil 1.2 wird eine Kapazität 1.3 auf das Potential B aufgeladen. Nach dem Ladevorgang ist das Potential B um den Spannungsabfall des Schaltungsteils 1.2 geringer als das Potential A an dem Widerstand 1.1. Das Potential A entspricht nun in etwa der Versorgungsspannung der Versorgungseinheit 2, da (fast) kein Strom mehr fließt. Insbesondere kann die Schaltung so dimensioniert werden, dass nur Leckströme der Kapazität 1.3 als Energieverlust auftreten. Daher ist der Energieverbrauch der Detektionsschaltung nahezu Null.

Nimmt die Versorgungsspannung der Versorgungseinheit 2, sprich der Batterie, z.B. aufgrund von Alterung, langsam ab, so verringern sich auch die Potentiale A und B. Hierbei ist das Potential B aufgrund der Selbstentladung der Kapazität 1.3 automatisch um die jederzeit konstant bleibende Spannungsdifferenz des Schaltungsteils 1.2 geringer. Wie bereits gesagt, kann bei Bedarf die Selbstentladung durch Einfügen des Widerstandes 1.4 erhöht werden. So ist es möglich, die Reaktionsgeschwindigkeit der Detektionsschaltung 1 zu optimieren.

Bei dem Schaltelement 1.5 handelt es sich im gezeigten Fall um einen P-leitenden Feldeffekttransistor (PFET) 1.5, an dessen Gate G das Potential A und an dessen Source S das Potential B anliegt. Der PFET 1.5 sperrt unter der Bedingung, das das Potential A größer ist als das Potential B. Folglich liegt am Drain D, welches mit dem Detektionseingang 6.2 des Mikrokontrollers 6 verbunden ist, keine Spannung an.

Fällt die primäre Versorgungseinheit 2 plötzlich aus, so fällt das Potential A wegen der noch angeschlossenen Verbraucher, z.B. des Konverters 3 relativ schnell auf Null. Der Schaltungsteil 1.2 verhindert durch seine nun sperrende Diode / seine nun sperrenden Dioden, dass auch das Potential B auf Null abfällt. Das Potential B verringert sich nur sehr langsam auf Grund der Selbstentladung der Kapazität 1.3 und bzw. der Kapazität 1.3 und des parallel geschalteten Widerstands 1.4. Somit ist Potential A bei Ausfall der Versorgungseinheit 2 viel geringer als Potential B. Als Folge hiervon wird das Schaltungselement 1.5, sprich der PFET, leitend.

Am Detektionseingang 6.2 des Mikrokontrollers 6 liegt die Spannung des ersten Energiespeichers 1.3, die ggf. durch die Zenerdiode 1.6 begrenzt ist.

Diese Begrenzung limitiert die Eingangsspannung am Mikrokontroller 6 auf die max. zulässige Eingangsspannung des Mikrokontrollers 6. Der durchgestellte Spannungspegel, der dem Pegel der Referenzspannung entspricht, ist so groß, dass der Mikrokontroller 6 sicher einen positiven Impuls bzw. eine positive Flanke erkennt und auf dieses "Pre-Power-Fail" reagieren kann. Die Reaktion kann beispielsweise in der Auslösung eines Interrupts bestehen, der eine Sicherungsroutine startet, um wichtige Daten und Parameter in einen nicht-flüchtigen Speicher zu schreiben.

### Bezugszeichenliste

- 1: Detektionsschaltung
- 1.1: Widerstand
- 1.2: Schaltungsteil
- 1.3: zweiter Energiespeicher / Kapazität / Kondensator
- 1.4: Widerstand
- 1.5: Schaltelement
- 2: primäre Versorgungseinheit / Batterie
- 3: Spannungskonverter
- 4: Diode
- 5: erster Energiespeicher / Kapazität / Kondensator
- 6: Mikrokontroller
- 7: Feldgerät
- 8: Diode
- 9: Zehnerdiode
- 10.1: Diode
- 10.2: Diode
- 10.3: Diode

## Patentansprüche

1. Feldgerät zur Bestimmung und/oder Überwachung einer physikalischen oder chemischen Prozessgröße in der Automatisierungstechnik mit zumindest einem Mikrokontroller (6), mit einer Versorgungseinheit (2) mit beschränkter Kapazität als primäre Versorgungsspannung, mit einem Schaltungsteil (1.2), und mit einer Detektionsschaltung (1), die dem Mikrokontroller (6) einen Ausfall der Versorgungseinheit (2) so frühzeitig mittels eines Detektionssignals signalisiert, dass ausreichend Zeit zur Verfügung steht, geeignete Sicherungsmaßnahmen zu ergreifen, um einen Verlust von Daten zu verhindern, indem zu der Versorgungseinheit (2) ein erster Energiespeicher (5) im Nebenzweig nachgeschaltet ist, der bei Ausfall der Versorgungseinheit (2) dem Mikrokontroller (6) genügend Energie zum Ergreifen der geeigneten Sicherheitsmaßnahmen zur Verfügung stellt, **dadurch gekennzeichnet, dass** die Detektionsschaltung (1) so ausgebildet ist, dass eine für die Detektion eines Spannungsabfalls der Versorgungseinheit (2) erforderliche Referenzspannung, welche als Schaltschwelle dient, einen nahezu konstanten Abstand zur Versorgungsspannung der Versorgungseinheit (2) aufweist, indem dem Schaltungsteil (1.2) ein zweiter Energiespeicher (1.3) im Nebenzweig nachgeschaltet ist, der im Normalfall auf ein vorbestimmtes Potential (B) aufgeladen ist, wobei das Potential (B) gegenüber dem Potential (A), das am Eingang des Schaltungsteils (1.2) anliegt, um den Spannungsabfall des Schaltungsteils (1.2) verringert ist,
wobei bei altersbedingtem Absinken der Versorgungsspannung auch die Schaltschwelle entsprechend geringer wird, und
wobei sich die Schaltschwelle solange an die Versorgungs-spannung anpasst, bis die Detektionsschaltung (1) im Falle eines sprunghaften Unterschreitens der Schaltschwelle ein Detektionssignal an den Mikrokontroller (6) durchstellt.

2. Feldgerät nach Anspruch 1,
dass ein Spannungskonverter (3) zwischen die Versorgungseinheit (2), die eine primäre Versorgungsspannung zur Verfügung stellt, und den Mikrokontroller (6) geschaltet ist, wobei der Spannungskonverter (3) die primäre Versorgungsspannung in eine auf den Mikrokontroller (6) abgestimmte sekundäre Versorgungsspannung konvertiert.

3. Feldgerät nach Anspruch 2, wobei in Reihe mit der Versorgungseinheit (2) oder in Reihe mit dem Spannungskonverter (3) eine Diode (4) in Sperrrichtung angeordnet ist, die, für den Fall, dass die Energieversorgungseinheit (2) ausfällt, den Stromfluss aus dem ersten Energiespeicher (5) in Richtung Spannungskonverter (3) bzw. in Richtung Versorgungseinheit (2) sperrt.

4. Feldgerät nach Anspruch 1, wobei das Schaltungsteil (1) so ausgelegt ist, dass es einerseits einen zumindest näherungsweise konstanten Spannungsabfall erzeugt und andererseits den Stromfluss in Richtung der Versorgungseinheit (2) unterbindet.

5. Feldgerät nach Anspruch 1, wobei es sich bei dem Schaltungsteil (1.2) um zumindest eine Diode oder um mehrere in Reihe geschaltete Dioden handelt.

6. Feldgerät nach Anspruch 1 wobei es sich bei dem Schaltungsteil (1.2) um eine Reihenschaltung, bestehend aus einer Diode in Flussrichtung und einer Zehnerdiode in Sperrrichtung, handelt.

7. Feldgerät nach Anspruch 1, wobei parallel zu dem zweiten Energiespeicher (1.3) ein Widerstand (1.4) geschaltet ist, der so bemessen ist, dass im Falle eins Ausfalls der Versorgungseinheit (2) die Selbstentladung des zweiten Energiespeichers (1.3) beschleunigt erfolgt.

8. Feldgerät nach einem oder mehreren der Ansprüche 1, 4, 5 und 6, wobei in Reihe zu dem Schaltungsteil (1.2) das Schaltelement (1.5) angeordnet ist, das so angesteuert wird, dass es bei Ausfall der Energieversorgungs-einheit (2) automatisch ein Signal an den Mikrokontroller (6) sendet, das diesem den Ausfall der Versorgungseinheit (2) signalisiert.

9. Feldgerät nach Anspruch 8, wobei es sich bei dem Schaltelement (1.5) um einen Transistor mit Gate (G), Drain (D) und Source (S) handelt, der im Normalfall sperrt, wenn also an dem Gate (G) das Potential (A) und am Source (S) das Potential (B) anliegt und das Potential (A) größer ist als das Potential (B).

10. Feldgerät noch Anspruch 8 oder 9, wobei das Schaltelement (1.5) bzw. der Transistor leitend wird und dem Mikrokontroller (6) durch ein Detektionssignal den Ausfall der Versorgungseinheit (2) anzeigt, sobald infolge des Ausfalls der Versorgungseinheit (2) das Potential (A) am Gate (G) kleiner wird als das Potential (B) am Source (S).

11. Feldgerät nach Anspruch 9 oder 10, wobei es sich bei dem Transistor (1.5) um einen Feldeffekt-Transistor oder um einen bipolaren Transistor handelt.

12. Feldgerät nach einem oder mehreren der Ansprüche 9 bis 11, wobei in Reihe mit dem Drain (D) des Transistors (1.5) eine Zehnerdiode (1.6) nach Masse geschaltet ist, die das Detektionssignal, das an den Mikrokontroller (6) gesendet wird, auf einen Grenzwert reduziert, der innerhalb der Spezifikation des Mikrokontrollers (6) liegt.

## Claims

1. Field device designed to determine and/or monitor a physical or chemical process variable in automation engineering with at least one microcontroller (6), with a power supply unit (2) with limited capacity as the primary supply voltage, with a circuit part (1.2) and with a detection circuit (1) which reports a failure of the power supply unit (2) to the microcontroller (6) by means of a detection signal at such an early stage that enough time is available to take suitable data backup measures to prevent the loss of data, in that a first energy storage unit (5) is connected downstream from the power supply unit (2) in a secondary branch and, in the event of the failure of the power supply unit, provides the microcontroller (6) with sufficient energy to take the appropriate data backup measures,
**characterized in that**
the detection circuit (1) is designed in such a way that a reference voltage which is necessary for the detection of a voltage drop in the power supply unit (2), and acts as a switching threshold, is at a virtually constant distance from the supply voltage of the power supply unit (2),
**in that** a second energy storage unit (1.3) is connected downstream from the circuit part (1.2), in the secondary branch, which, in the normal situation, is charged to a predefined potential (B), wherein the potential (B) is reduced in relation to the potential (A), which is present at the input of the circuit part (1.2), by the voltage drop of the circuit part (1.2),
wherein in the event that the supply voltage drops due to ageing the switching threshold is also reduced accordingly, and
wherein the switching threshold continues adapting to the supply voltage until the detection circuit (1) transmits a detection signal to the microcontroller (6) in the event that the switching threshold is rapidly undershot.

2. Field device as claimed in Claim 1, wherein a voltage converter (3) is switched between the power supply unit (2), which makes the primary supply voltage available, and the microcontroller (6), wherein the voltage converter (3) converts the primary supply voltage to a secondary supply voltage which is adapted to the microcontroller (6).

3. Field device as claimed in Claim 2, wherein a diode is arranged in series with the power supply unit (2), or in series with the voltage converter (3), in the blocking direction, said diode blocking the flow of electricity from the first energy storage unit (5) in the direction of the voltage converter (3) or in the direction of the power supply unit (2) if the power supply unit (2) fails.

4. Field device as claimed in Claim 1, wherein the circuit part (1) is designed in such a way that it generates an at least approximately constant voltage drop on the one hand, and on the other hand prevents the flow of electricity in the direction of the power supply unit (2).

5. Field device as claimed in Claim 1, wherein the circuit part (1.2) is at least one diode or several diodes switched in series.

6. Field device as claimed in Claim 1, wherein the circuit part (1.2) is a series circuit consisting of a diode in the flow direction and a zener diode in the blocking direction.

7. Field device as claimed in Claim 1, wherein a resistor (1.4) is switched parallel to the second energy storage unit (1.3), the size of said resistor being such that the auto-discharging of the second energy storage unit (1.3) is accelerated if the power supply unit (2) fails.

8. Field device as claimed in one or more of the Claims 1,4,5 and 6, wherein the switching element (1.5) is arranged in series to the circuit part (1.2), said element being activated in such a way that, in the event of the failure of the power supply unit (2), it automatically sends a signal to the microcontroller (6) that signals the failure of the power supply unit (2) to said microcontroller (6).

9. Field device as claimed in Claim 8, wherein the switching element (1.5) is a transistor with a gate (G), a drain (D) and a source (S) which, in the normal situation, blocks, i.e. if the potential (A) is applied at the gate (G) and the potential (B) is applied at the source (S) and the potential (A) is greater than the potential (B).

10. Field device as claimed in Claim 8 or 9, wherein the switching element (1.5) or the transistor becomes conductive and indicates the failure of the power supply unit (2) to the microcontroller (6) by means of a detection signal as soon as the potential (A) at the gate (G) becomes smaller than the potential (B) at the source (S) as a result of the failure of the power supply unit (2).

11. Field device as claimed in Claim 9 or 10, wherein the transistor (1.5) is a field effect transistor or a bipolar transistor.

12. Field device as claimed in one of more of the Claims 9 to 11 wherein a zener diode (1.6) is switched to ground in series with the drain (D) of the transistor (1.5), said zener diode reducing the detection signal that is sent to the microcontroller to a limit value that is within the specification of the microcontroller (6).

## Revendications

1. Appareil de terrain destiné à la détermination et/ou à la surveillance d'une grandeur de process physique ou chimique dans la technique d'automatisation, avec au moins un microcontrôleur (6), avec une unité d'alimentation (2) de capacité limitée, avec un élément de circuit (1.2) et avec un circuit de détection (1), qui signale au microcontrôleur (6) une défaillance de l'unité d'alimentation (2) au moyen d'un signal de détection, suffisamment tôt afin de disposer d'assez de temps pour prendre des mesures de sauvegarde appropriées afin d'éviter une perte de données, en ce qu'un premier accumulateur d'énergie (5) est couplé, dans une branche secondaire, en aval de l'unité d'alimentation (2), lequel accumulateur met à la disposition du microcontrôleur (6), en cas de défaillance de l'unité d'alimentation (2), suffisamment d'énergie afin de pouvoir prendre des mesure de sauvegarde appropriées,
**caractérisé**
**en ce que** le circuit de détection (1) est conçu de telle sorte qu'une tension de référence nécessaire pour la détection de la chute de tension de l'unité d'alimentation (2), laquelle tension de référence sert de seuil de commutation, présente un écart à peu près constant par rapport à la tension de l'unité d'alimentation (2),
**en ce qu'**un deuxième accumulateur d'énergie (1.3) est couplé, dans la branche secondaire, en aval de l'élément de circuit (1.2), lequel accumulateur est chargé à un potentiel (B) prédéterminé, le potentiel (B), qui est appliqué à l'entrée de l'élément de circuit (1.2), étant diminué par rapport au potentiel (A) de la chute de tension de l'élément de circuit (1.2),
le seuil de commutation diminuant en outre selon la baisse de la tension d'alimentation due au vieillissement, et
le seuil de commutation s'adaptant à la tension d'alimentation jusqu'à ce que le circuit de détection (1) transmette au microcontrôleur (6) un signal de détection en cas de passage brusque sous le seuil de commutation.

2. Appareil de terrain selon la revendication 1, pour lequel un convertisseur de tension (3) est couplé entre l'unité d'alimentation (2), qui met à disposition une tension d'alimentation primaire, et le microcontrôleur (6), le convertisseur de tension (3) convertissant la tension d'alimentation primaire en une tension d'alimentation secondaire adaptée au microcontrôleur (6).

3. Appareil de terrain selon la revendication 2, pour lequel est disposée, en série avec l'unité d'alimentation (2) ou en série avec le convertisseur de tension (3), une diode (4) dans le sens bloquant qui, pour le cas où l'unité d'alimentation en énergie (2) tombe en panne, bloque le flux de courant provenant du premier accumulateur d'énergie (5) en direction du convertisseur de tension (3) ou en direction de l'unité d'alimentation (2).

4. Appareil de terrain selon la revendication 1, pour lequel l'élément de circuit (1) est conçu de telle sorte, d'une part, à générer une chute de tension approximativement constante et, d'autre part, à empêcher le flux de courant en direction de l'unité d'alimentation (2).

5. Appareil de terrain selon la revendication 1, pour lequel il s'agit, concernant l'élément de circuit (1.2), d'au moins une diode ou de plusieurs diodes couplées en série.

6. Appareil de terrain selon la revendication 1, pour lequel il s'agit, concernant l'élément de circuit (1.2), d'un circuit série constitué d'une diode dans le sens passant et d'une diode zener dans le sens bloquant.

7. Appareil de terrain selon la revendication 1, pour lequel est couplée, en parallèle du deuxième accumulateur d'énergie (1.3), une résistance (1.4), laquelle est dimensionnée de telle sorte qu'en cas de défaillance de l'unité d'alimentation (2), l'autodécharge du deuxième accumulateur d'énergie (1.3) est accélérée.

8. Appareil de terrain selon l'une ou plusieurs des revendications 1, 4, 5 et 6, pour lequel est couplé, en série de l'élément de circuit (1.2), l'organe de commutation (1.5) de telle sorte qu'en cas de défaillance de l'unité d'alimentation en énergie (2), il émet automatiquement au microcontrôleur (6) un signal indiquant à ce dernier la défaillance de l'unité d'alimentation (2).

9. Appareil de terrain selon la revendication 8, pour lequel il s'agit, concernant l'organe de commutation (1.5), d'un transistor avec grille (G), drain (D) et source (S) qui, dans le cas normal, se bloque lorsque le potentiel (A) est appliqué à la grille (G) et le potentiel (B) est appliqué à la source (S), et lorsque le potentiel (A) est supérieur au potentiel (B).

10. Appareil de terrain selon la revendication 8 ou 9, pour lequel l'organe de commutation (1.5) ou le transistor devient passant et indique au microcontrôleur (6), au moyen d'un signal de détection, la défaillance de l'unité d'alimentation (2) sitôt que, suite à la défaillance de l'unité d'alimentation (2), le potentiel (A) sur la grille (G) est inférieur au potentiel (B) sur la source (S).

11. Appareil de terrain selon la revendication 9 ou 10, pour lequel il s'agit, concernant le transistor, d'un transistor à effet de champ ou d'un transistor bipolaire.

12. Appareil de terrain selon l'une ou plusieurs des revendications 9 à 11, pour lequel est couplée par rapport à la masse, en série avec le drain (D) du transistor (1.5), une diode zener (1.6), qui réduit à une valeur seuil le signal de détection émis au microcontrôleur (6), laquelle valeur seuil se situe à l'intérieur de la spécification du microcontrôleur (6).
